# EUROPÄISCHE PATENTANMELDUNG

(11) **EP 0 993 985 A2**
(43) Veröffentlichungstag der Anmeldung: **19.04.2000**
(21) Anmeldenummer: 99116844.4
(22) Anmeldetag: 03.09.1999
(51) Int. Cl.: B60N 3/10

(54) **Vorrichtung zur Halterung von Gebrauchsgegenständen in Fahrzeugen, insbesondere Kraftfahrzeugen**

(30) Priorität: 15.10.1998 DE 19847609
(71) Anmelder: Volkswagen Aktiengesellschaft, 38436 Wolfsburg (DE)
(72) Erfinder: Schicht, Horst, 38518 Gifhorn (DE)

(57) **Zusammenfassung**

Bei einer Vorrichtung zur Halterung von Gebrauchsgegenständen in Fahrzeugen, insbesondere Kraftfahrzeugen, mit einem den Gebrauchsgegenstand unmittelbar aufnehmenden Halteelement und einer das Halteelement mit dem Fahrzeugkörper verbindenden Tragvorrichtung ist das Halteelement ein sogenanntes 3-Finger-Greifersystem mit zwei in einer Horizontalebene und einem dritten in einer Vertikalebene beweglichen Finger-Greifer, welcher die Symmetrieebene zwischen den beiden horizontalbeweglichen Finger-Greifern bildet. Hierbei sind die drei Finger-Greifer am freien Ende der Tragvorrichtung angelenkt.

Eine Haltevorrichtung mit den vorgenannten Merkmalen ermöglicht eine sichere und gebrauchsgerechte Halterung nicht nur von Trinkgefäßen, wie Tassen und Bechern, sondern darüber hinaus auch von Gebrauchsgegenständen gänzlich andersartiger, unterschiedlicher Form und Konsistenz, z.B. von Raucherutensilien (Pfeife, Zigarre, Zigarette, etc.), Stadtplänen, Landkarten, Fotoapparaten und dergleichen mehr.

## Beschreibung

Die Erfindung bezieht sich auf eine Vorrichtung nach dem Oberbegriff des Anspruchs 1.

Es ist bekannt, im Armaturentafelbereich von Kraftfahrzeugen, insbesondere PKW, einfache Haltevorrichtungen, üblicherweise als 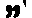 Cupholder" bezeichnet anzubringen, die es dem Fahrer oder dem Beifahrer ermöglichen sollen, Trinkgefäße und dergleichen in ihrer Abstellposition zu halten. Die zumeist starr angeordneten bekannten Haltevorrichtungen haben nur sehr begrenzte Haltefunktionen, die sich praktisch auf die Aufnahme von Trinkgefäßen beschränken.

Ausgehend von diesem Stand der Technik ist es die Aufgabe der vorliegenden Erfindung, eine Haltevorrichtung zu schaffen, die sich durch eine Vielzahl von Haltefunktionen auszeichnet.

Gemäß der Erfindung wird die Aufgabe bei einer Vorrichtung der eingangs bezeichneten Art durch die aus dem kennzeichnenden Teil des Anspruchs 1 entnehmbaren Merkmale gelöst.

Vorteilhafte Weiterbildungen dieses Grundgedankens der Erfindung enthalten die Ansprüche 2 - 8.

Die erfindungsgemäße Vorrichtung ermöglicht eine sichere und gebrauchsgerechte Halterung nicht nur von Trinkgefäßen, wie Tassen und Bechern, sondern darüber hinaus auch von Gebrauchsgegenständen gänzlich andersartiger, unterschiedlicher Form und Konsistenz, z.B. von Raucherutensilien (Pfeife, Zigarre, Zigarette etc.), Stadtplänen, Landkarten, Fotoapparaten u.a.m.
Merkmale einer bevorzugten Ausführungsform von der Erfindung sind dem Anspruch 9 zu entnehmen. Diese Ausführungsform ermöglicht ein Verschwenken der erfindungegemäßen Halterungsvorrichtung in nahezu jede gewünschte Lage des Cockpit-Bereichs, so daß die gehaltenen Gebrauchsgegenstände zumindest den beiden auf den Vordersitzen befindlichen Fahrzeuginsassen optimal zugänglich sind.

Weitere vorteilhafte Ausgestaltungen der Ausführungsform nach Anspruch 9 können den Ansprüchen 10 - 16 entnommen werden.

Die Erfindung ist nun in der Zeichnung anhand von Ausführungsbeispielen veranschaulicht, die im folgenden detailliert beschrieben sind. Es zeigt:
- Fig. 1:: eine Separatdarstellung des Armaturentafelbereichs eines Kraftfahrzeugs,
- Fig. 2:: eine Ausführungsform eines Halteelementes zur unmittelbaren Aufnahme von Gebrauchsgegenständen, in Seitenansicht,
- Fig. 3:: den Gegenstand von Fig. 2, in Draufsicht (Pfeilrichtung A) betrachtet,
- Fig. 4:: eine Ausführungsform einer gelenkigen Tragvorrichtung für ein Halteelement, in Seitenansicht (schematisch),
- Fig. 5:: einen Schnitt längs der Linie V-V in Fig. 4 (innerhalb der Zeichenebene um 90° gedreht),
- Fig. 6:: einen Schnitt längs der Linie VI-VI in Fig. 4,
- Fig. 7:: im Längsschnitt (Schnitt VII-VII in Fig. 8) - eine andere Ausführungsform einer Tragvorrichtung für ein Halteelement, mit einer von Fig. 4 - 6 abweichenden Gelenkverbindung der Tragarme, und
- Fig. 8:: einen Schnitt längs der Linie VIII-VIII in Fig. 7.

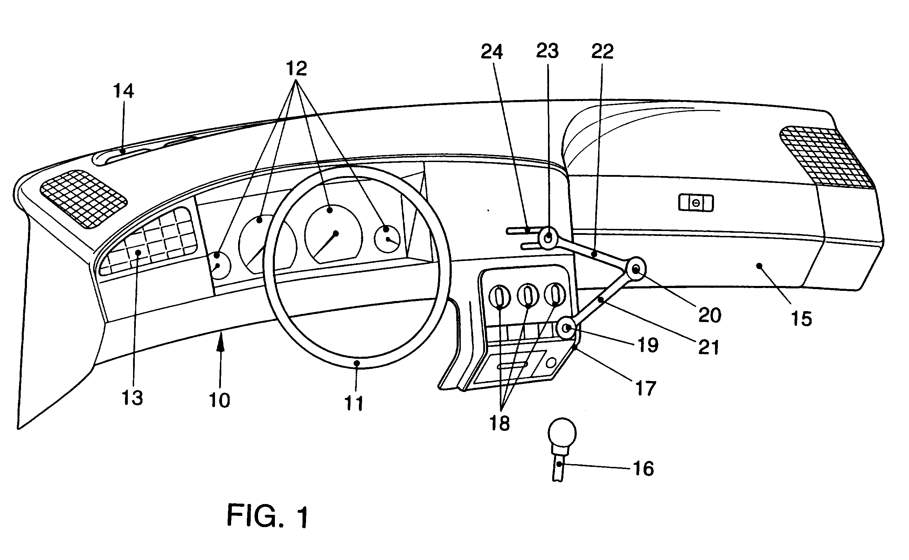

In Fig. 1 bezeichnet 10 insgesamt die Armaturentafel eines PKW's mit Lenkrad 11, Instrumenten 12, Heizungs-/Lüftungsöffnungen 13, 14 und Handschuhfach 15. Angedeutet ist ferner das obere Ende eines Schaltknüppels 16 zur Getriebebetätigung des Fahrzeugs.

Im mittleren Bereich der Armaturentafel 10 ist an diese eine sich nach unten erstreckende Konsole 17 angeformt, welche Bedienknöpfe 18 für die Heizungs-/Lüftungsanlage enthält und auch zur Aufnahme eines Radios, Kassettenrecorders etc. (nicht dargestellt) vorbereitet sein kann.
Des weiteren ist an der Konsole 17 - bei 19 - eine Tragvorrichtung angelenkt, die aus zwei durch ein weiteres Gelenk 20 miteinander verbundenen Tragarmen 21, 22 besteht. Am freien Ende der Tragvorrichtung 21, 22 und durch ein weiteres Gelenk 23 mit dem Tragarm 22 verbunden, ist ein nur schematisch angedeutetes Halteelement 24 angeordnet, welches zur lösbaren Halterung von Trinkgefäßen, Stadtplänen, Landkarten, Raucherutensilien und dergleichen mehr, vorgesehen ist.

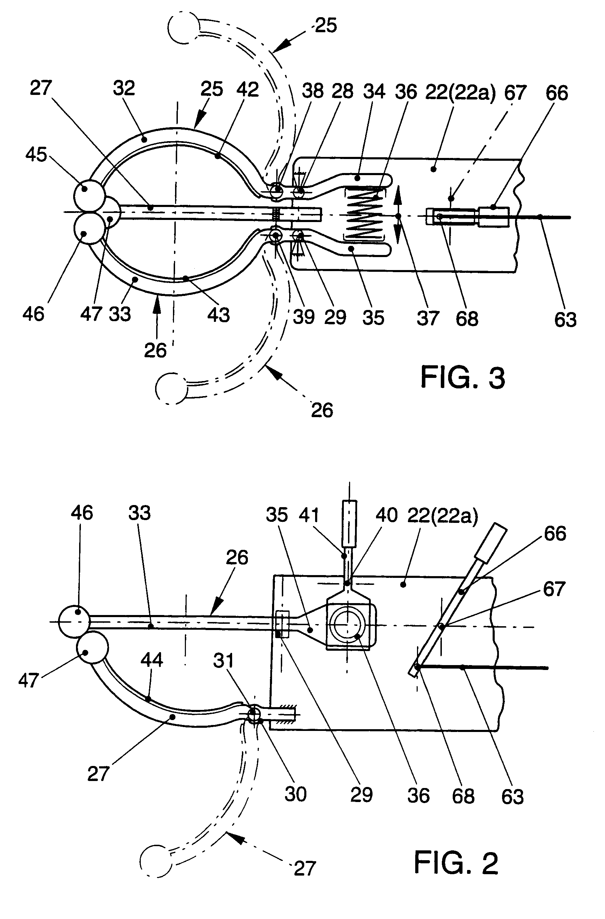

Eine vorteilhafte Ausführungsform eines solchen Halteelementes zeigen Fig. 2 und 3. Es ist als sogenanntes 3-Finger-Greifersystem ausgebildet und besteht demgemäß aus drei Finger-Greifern 25, 26 und 27. Hiervon sind die beiden mit 25, 26 bezeichneten Finger-Greifer in einer Horizontalebene verschwenkbar ausgebildet und durch je ein Gelenk 28 bzw. 29 am freien Ende des Tragarmes 22 angelenkt. Der dritte Finger-Greifer 27 greift über ein Gelenk 30 am Tragarm 22 an und ist, wie Fig. 2 erkennen läßt, um eine Horizontalachse 31 in einer Vertikalebene verschwenkbar angeordnet.

Wie insbesondere aus Fig. 3 hervorgeht, sind die beiden innerhalb einer Horizontalebene verschwenkbaren Finger-Greifer 25, 26 jeweils als zweiarmige Hebel ausgebildet, wobei ein vorderer, sichelartig gekrümmter Hebelarm 32 bzw. 33 einen unmittelbar mit dem zu haltenden Gebrauchsgegenstand (nicht gezeigt) zusammenwirkenden Greifarm bildet. Ein rückwärtiger, abgeknöpft ausgebildeter zweiter Hebelarm 34 bzw. 35 erstreckt sich in den Bereich des Tragarmes 22 hinein. Die beiden zweiten Hebelarme 34, 35 sind dort, wie insbesondere Fig. 3 deutlich macht, durch eine zwischengeschaltete Druckfeder 36 in Pfeilrichtung 37 beaufschlagt. Die Druckfeder 36 bewirkt ein selbsttätiges Bewegen der beiden Finger-Greifer 25, 26 in ihrer in Fig. 3 in ausgezogenen Linien dargestellte Schließstellung. Ein Öffnen der Finger-Greifer 25, 26 kann demgemäß zunächst nur unter Überwindung des Widerstandes der Druckfeder 36 erreicht werden.

Eine weitere Besonderheit der Ausführungsform nach Fig. 2 und 3 besteht darin, daß jeweils der vordere Hebelarm 32 bzw. 33 der Finger-Greifer 25, 26 nochmals unterteilt ist, und zwar durch ein Drehgelenk 38 bzw. 39 mit zahlreichen Raststellungen. Hierdurch ist eine - in Fig. 3 instrichpunktierten Linien angedeutete - weite Öffnungsstellung der horizontalbeweglichen Finger-Greifer 25, 26 möglich. Die beiden horizontalbeweglichen Finger-Greifer 25, 26 können durch einen bei 40 am Tragarm 22 gelenkig gelagerten Betätigungshebel 41, der hierbei zwischen die beiden rückwärtigen Hebelarme 34, 35 der Finger-Greifer 25, 26 greift, manuell bewegt werden.
Auch das Gelenk 30 des in der Vertikalebene verschwenkbaren Finger-Greifers 27, der ebenfalls eine sichelartige Krümmung aufweist, ist als Drehgelenk mit zahlreichen Raststellungen ausgeführt. Das Drehgelenk 30 ermöglicht eine entsprechend weite, in Fig. 2 strichpunktiert angedeutete Öffnungsstellung des dritten Finger-Greifers 27.

Eine weitere Besonderheit der in Fig. 2 und 3 gezeigten Ausführungsform ist darin zu sehen, daß die Finger-Greifer 25, 26, 27 an ihren unmittelbar mit dem aufzunehmenden Gegenstand zusammenwirkenden Innenflächen 42, 43, 44 mit einem die Haftigkeit erhöhenden Kunststoffmaterial, vorzugsweise einem Silikon- oder Polyurethan-Elastomer, beschichtet sind. Des weiteren sind an den freien Enden der unmittelbar mit dem aufzunehmenden Gegenstand zusammenwirkenden Hebelarme 32, 33, 27 der Finger-Greifer 25, 26, 27 kugelförmige Kappen 45, 46, 47 aus einem die Haftigkeit erhöhenden Kunststoffmaterial, vorzugsweise einem Silikon- oder Polyurethan-Elastomer, angeordnet. Diese Maßnahmen tragen zur weiteren Verbesserung der Haltefunktion bei.

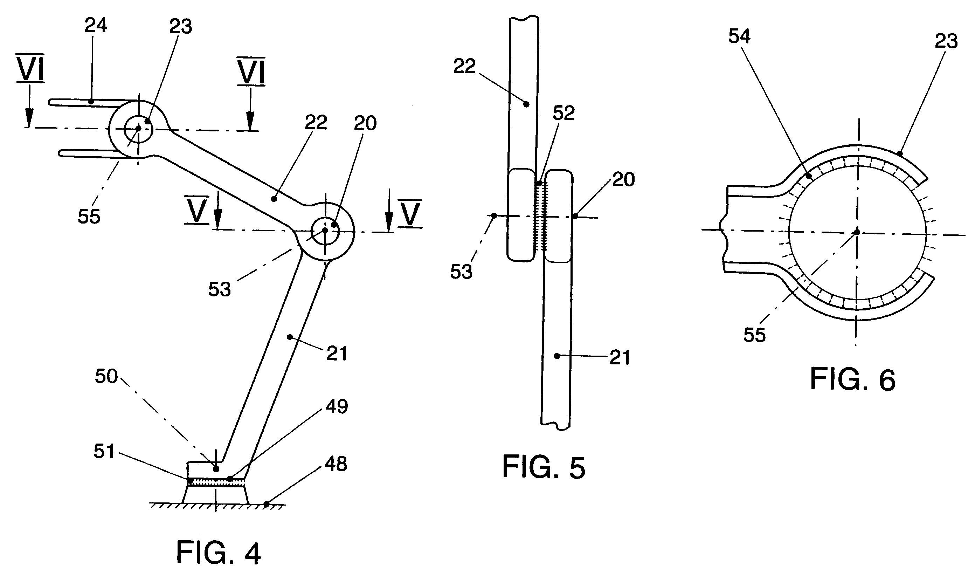

Die aus Fig. 4, 5 und 6 ersichtliche Tragvorrichtung 21, 22 entspricht weitgehend der Ausführungsform nach Fig. 1. Jedoch ist die Verbindung zum Fahrzeugkörper etwas anders als in Fig. 1 ausgestaltet. Der Fahrzeugkörper oder ein mit diesem verbundenes Bauteil, z.B. eine Mittelkonsole oder dergleichen, ist in Fig. 4 schematisch angedeutet und mit 48 bezeichnet. Ein Gelenk 49 ermöglicht ein Verschwenken der Tragvorrichtung 21, 22 um eine Vertikalachse 50. Das Gelenk 49 ist mit einer Verrastung 51 ausgerüstet, die eine Arretierung der Tragvorrichtung 21, 22 in einer Vielzahl von kleinstufig zueinander abgestuften Winkelstellungen um die Vertikalachse 50 erlaubt. In ähnlicher Weise ist auch das die beiden Tragarme 21, 22 der Tragvorrichtung miteinander verbindende Gelenk 20 ausgeführt (siehe Fig. 5). Hier ist ebenfalls eine Verrastung - in Fig. 5 mit 52 beziffert - vorgesehen, die ein Verschwenken bzw. eine Arretierung in zahlreichen Winkelstellungen, in diesem Fall um eine Horizontalachse 53, ermöglicht.

Ein in seiner Ausführung und Arretierungsmöglichkeit ebenfalls den Gelenken 20 und 49 entsprechendes (weiteres) Gelenk 23 verbindet das Halteelement 24 mit dem oberen Tragarm 22. Die betreffende Verrastung ist aus Fig. 6 ersichtlich und mit 54 bezeichnet. Die Verschwenkung erfolgt hier um eine Horizontalachse 55.

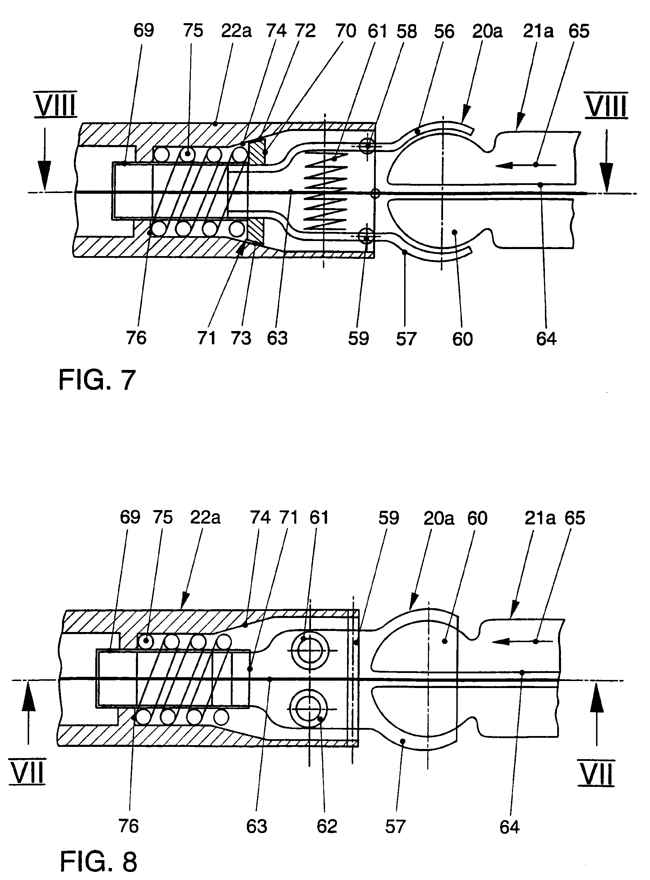

Eine andere Ausführungsform des die beiden Tragarme der Tragvorrichtung verbindenden Gelenks zeigen Fig. 7 und 8. Die Tragarme sind hier mit 21a und 22a und das diese verbindende Gelenk ist mit 20a beziffert. Bei dem Gelenk 20a handelt es sich - im Gegensatz zu dem Gelenk 20 nach Fig. 4 und 5 - um ein Kugelgelenk, bei dem eine Verstellung der beiden Tragarme 21a, 22a nicht nur auf eine einzige (horizontale) Drehachse beschränkt ist. Vielmehr ermöglicht das Kugelgelenk 20a eine Verstellung der Tragarme 21a, 22a in einer Vielzahl von Winkelstellungen um jede beliebige Drehachse. Wie im einzelnen aus Fig. 7 und 8 hervorgeht, ist die Gelenkkapsel des Kugelgelenks 20a als Halbschalengelenk ausgeführt, wobei zwei die Gelenkkapsel bildende Halbschalen mit 56, 57 bezeichnet sind. Die Halbschalen 56, 57 sind je durch ein Gelenk 58 bzw. 59 am Tragarm 22a schwenkbar befestigt. Eine von der Gelenkkapsel (Halbschalen 56, 57) umschlossene Gelenkkugel ist Bestandteil des Tragarmes 21a und mit 60 beziffert.

Die die Gelenkkapsel des Kugelgelenks 20a bildenden Halbschalen 56, 57 sind von zwei Druckfedern 61, 62 in dem Sinne beaufschlagt, daß sich die Gelenkkapsel (56, 57) eng an die Gelenkkugel 60 anlegt und es hierdurch zur einer Arretierung der jeweiligen Winkelstellung der beiden Tragarme 21a, 22a zueinander kommt. Diese arretierte Stellung des Kugelgelenks 20a ist in Fig. 7 und 8 dargestellt.

Zur Lösung der federkraftbedingten Klemmung des Kugelgelenks 20a ist ein Bowdenzug 63 vorgesehen, der die beiden Tragarme 21a, 22a axial und zentrisch durchsetzt. Der erste Tragarm 21a besitzt zu diesem Zweck eine entsprechende Längsmittelbohrung 64 während der zweite Tragarm 22a im wesentlichen als Hohlkörper ausgebildet ist.

Der Bowdenzug 63 läßt sich manuell betätigen, und zwar in Pfeilrichtung 65. Hierzu ist, wie Fig. 2 und 3 erkennen lassen, am freien Ende des zweiten Tragarmes 22a (bzw. 22) ein Betätigungshebel 66 um eine Achse 67 schwenkbar angeordnet. Der Bowdenzug 63 greift bei 68 an dem Betätigungshebel 66 an.

Im Bereich des Kugelgelenks 20a (Fig. 7 und 8) greift der Bowdenzug 63 an einer Klemmhülse 69 an, durch die die Gelenk-Halbschalen 56, 57 betätigt werden. Hierzu dienen zwei axialverschiebliche Keilelemente 70, 71 (siehe insbesondere Fig. 7), welche radial innen die rückwärtigen Hebelenden der Gelenk-Halbschalen 56, 57 beaufschlagen. Radial außen weisen die Keilelemente 70, 71 je eine Schrägfläche 72 bzw. 73 auf, die mit einer entsprechenden Konusfläche 74 im Inneren des zweiten Tragarmes 22a zusammenwirkt.

Wird nun der Bowdenzug 63 in Pfeilrichtung 65 betätigt, so führen die Keilelemente 70, 71 gleichzeitig mit ihrer entsprechenden Axialbewegung jeweils eine Radialbewegung nach innen aus und spreizen dadurch die Gelenkhalbschalen 56, 57, welche infolgedessen die Klemmung der Gelenkkugel 60 aufheben.

Die Rückstellung des Bowdenzugs 63 bzw. der Keilelemente 70, 71 in ihre (aus Fig. 7 und 8 ersichtliche) Ausgangsstellung (arretierte Stellung des Kugelgelenks 20a) erfolgt durch eine Druckfeder 75, welche die Klemmhülse 69 umschließt und sich einerseits an den Keilelementen 70, 71, andererseits an einem Absatz 76 im Inneren des zweiten Tragarmes 22a axial abstützt.

Die Betätigung der Keilelemente 70, 71 durch den Bowdenzug 63 (in Pfeilrichtung 65) und damit die Aufhebung der Gelenkklemmung (Arretierstellung) kann somit nur gegen den Widerstand der Druckfeder 75 erfolgen.

Fig. 7 und 8 und die diesbezügliche vorstehende Beschreibung beziehen sich zwar konkret nur auf das die beiden Tragarme 21a, 22a der Tragvorrichtung miteinander verbindende (mittlere) Gelenk 20a. Ungeachtet dessen kann aber auch das (in Fig. 7 und 8 nicht dargestellte) Verbindungsgelenk der Tragvorrichtung 21a, 22a zum Fahrzeugkörper (vgl. hierzu die Bezugszeichen 19 und 49 in Fig. 1 bzw. 4) ganz ähnlich oder gleichartig wie das Kugelgelenk 20a ausgebildet sein. Dies gilt auch für die Art der Betätigung. Diese - bevorzugte - Möglichkeit ist in Fig. 7 und 8 durch den (auch) den Tragarm 21a durchsetzenden Bowdenzug 63 angedeutet. Die Betätigung der beiden Kugelgelenke durch den Bowdenzug 63 erfolgt also in diesem Falle gleichzeitig.

Eine Kugelgelenkkonzeption der Tragvorrichtung 21a, 22a mit Klemmarretierung (Selbsthemmung) hat den Vorteil, daß sich die Tragarme stufenlos beliebig verstellen und in der jeweiligen Winkelstellung problemlos arretieren lassen.

In jedem Fall empfiehlt es sich, Tragvorrichtung 21, 22 bzw. 21a, 22a und Gelenke 19, 20, 20a, 23 und 49 so auszulegen und anzuordnen, daß die Vorrichtung zur Halterung 24 bzw. 25 bis 27 im Griffbereich sowohl vom Fahrer wie auch vom Beifahrer liegt. Ferner sollte die Tragvorrichtung zusammenklappbar ausgebildet sein, derart, daß sie bei Nichtgebrauch in einer Cockpitmulde versenkt angeordnet werden kann.

## Patentansprüche

1. Vorrichtung zur Halterung von Gebrauchsgegenständen in Fahrzeugen, insbesondere Kraftfahrzeugen, mit einem den Gebrauchsgegenstand unmittelbar aufnehmenden Halteelement und einer das Halteelement mit dem Fahrzeugkörper verbindenden Tragvorrichtung, dadurch gekennzeichnet, daß das Halteelement ein sogenanntes 3-Finger-Greifersystem mit zwei (25, 26) in einer Horizontalebene und einem dritten, in einer Vertikalebene beweglichen Finger-Greifer (27) ist, welcher die Symmetrieebene zwischen den beiden horizontalbeweglichen Finger-Greifern (25, 26) bildet, und daß die drei Finger-Greifer (25, 26, 27) am freien Ende der Tragvorrichtung (21, 22; 21a, 22a) angelenkt sind.

2. Vorrichtung nach Anspruch 1, dadurch gekennzeichnet, daß die beiden horizontalbeweglichen Finger-Greifer (25, 26) jeweils zweiarmige Hebel sind, die durch je ein Drehgelenk (28 bzw. 29) an der Tragvorrichtung (21, 22; 21a, 22a) angreifen, und daß zwischen den rückwärtigen Hebelarmen (34, 35) eine Druckfeder (36) angeordnet ist (Fig. 2 und 3).

3. Vorrichtung nach Anspruch 1 oder 2, dadurch gekennzeichnet, daß die unmittelbar mit dem aufzunehmenden Gegenstand zusammenwirkenden Hebelarme (32, 33, 27) der Finger-Greifer (25, 26, 27) sichelartig gekrümmt ausgebildet sind.

4. Vorrichtung nach Anspruch 1, 2 oder 3, dadurch gekennzeichnet, daß die unmittelbar mit dem aufzunehmenden Gegenstand zusammenwirkenden Hebelarme (32, 33) der beiden horizontalbeweglichen Finger-Greifer (25, 26) jeweils durch ein Rastgelenk (38 bzw. 39) mit mehreren Raststellungen in zwei Hebelarmteile unterteilt sind, wobei die Rastgelenke (38, 39) jeweils zwischen dem Drehgelenk (28 bzw. 29) und dem sichelartig gekrümmten (vorderen) Hebelarmteil (32 bzw. 33) angeordnet sind.

5. Vorrichtung nach einem oder mehreren der vorstehenden Ansprüche, dadurch gekennzeichnet, daß der dritte, vertikalbewegliche Finger-Greifer (27) durch ein mehrere Raststellungen aufweisendes Drehgelenk (30) mit dem freien Ende der Tragvorrichtung (21, 22) verbunden ist (Fig. 2).

6. Vorrichtung nach einem oder mehreren der Ansprüche 2 bis 5, dadurch gekennzeichnet, daß die horizontalbeweglichen Finger-Greifer (25, 26) durch einen zwischen den beiden rückwärtigen Hebelarmen (34, 35) angeordneten Greifer-Betätigungshebel (41) entgegen dem Widerstand der Druckfeder (36) betätigbar sind.

7. Vorrichtung nach einem oder mehreren der vorstehenden Ansprüche, dadurch gekennzeichnet, daß die Finger-Greifer (25, 26, 27) an ihren unmittelbar mit dem aufzunehmenden Gegenstand zusammenwirkenden Innenflächen (42, 43, 44) mit einem die Haftigkeit erhöhenden Kunststoffmaterial, vorzugsweise einem Silikon- oder Polyurethan-Elastomer, beschichtet sind.

8. Vorrichtung nach einem oder mehreren der vorstehenden Ansprüche, dadurch gekennzeichnet, daß an den freien Enden der unmittelbar mit dem aufzunehmenden Gegenstand zusammenwirkenden Hebelarme (32, 33, 27) der Finger-Greifer (25, 26, 27) kugelförmige Kappen (45, 46, 47) aus einem die Haftigkeit erhöhenden Kunststoffmaterial, vorzugsweise einem Silikon- oder Polyurethan-Elastomer, angeordnet sind.

9. Vorrichtung nach einem oder mehreren der vorstehenden Ansprüche, dadurch gekennzeichnet, daß die Tragvorrichtung (21, 22) durch ein Gelenk (49) am Fahrzeugkörper (48) angreift und zwei Tragarme (21, 22) aufweist, die durch ein weiteres Gelenk (20) miteinander verbunden sind, derart, daß die Tragvorrichtung (21, 22) insgesamt gegenüber dem Fahrzeugkörper (48) und die Tragarme (21 bzw. 22) zueinander in mehreren Winkelstellungen arretierbar sind (Fig. 4).

10. Vorrichtung nach Anspruch 9, dadurch gekennzeichnet, daß die Gelenke der Tragvorrichtung (21a, 22a) als durch Klemmung arretierbare Kugelgelenke (20a) ausgebildet sind (Fig. 7 und 8).

11. Vorrichtung nach Anspruch 10, dadurch gekennzeichnet, daß die Gelenkkapsel des Kugelgelenks (20a) aus zwei druckfederbeaufschlagten (61, 62) Halbschalen (56, 57) besteht, die eine dem anderen Tragarm (21a) zugeordnete Gelenkkugel (60) umschließen, und daß zur Lösung der federkraftbedingten Gelenkklemmung manuell betätigbare Bowdenzugmittel (63) vorgesehen sind.

12. Vorrichtung nach Anspruch 11, dadurch gekennzeichnet, daß die Bowdenzugmittel (63) die Tragarme (21a, 22a) der Tragvorrichtung zentrisch axial durchsetzen und im Bereich des Kugelgelenks (20a) an einer die Gelenk-Halbschalen (56, 57) betätigenden Klemmhülse (69) angreifen.

13. Vorrichtung nach Anspruch 9, dadurch gekennzeichnet, daß die Gelenke (20, 23, 49) der Tragvorrichtung (21, 22) als Scharniergelenke mit einer zwischengeschalteten Verrastung (51 bzw. 52 bzw. 54) ausgebildet sind (Fig. 4- 6).

14. Vorrichtung nach Anspruch 10 oder 13, dadurch gekennzeichnet, daß die Gelenke (20a) der Tragvorrichtung durch Selbsthemmung in den verschiedenen Winkelstellungen der Tragarme (21a, 22a) stufenlos arretierbar sind.

15. Vorrichtung nach einem oder mehreren der vorstehenden Ansprüche, für den Cockpitbereich von Kraftfahrzeugen, dadurch gekennzeichnet, daß Tragvorrichtung (21, 22 bzw. 21a, 22) und Gelenke (19, 20, 20a, 23a, 49) so ausgelegt und angeordnet sind, daß die Vorrichtung zur Halterung (24 bzw. 25 - 27) im Griffbereich sowohl vom Fahrer wie auch vom Beifahrer liegt.

16. Vorrichtung nach einem oder mehreren der vorstehenden Ansprüche, für den Cockpitbereich von Kraftfahrzeugen, dadurch gekennzeichnet, daß die Tragvorrichtung (21, 22; 21a, 22a) zusammenklappbar ausgebildet ist, derart, daß sie bei Nichtgebrauch in einer Cockpitmulde versenkt angeordnet werden kann.
